# EUROPÄISCHE PATENTSCHRIFT

(11) **EP 3 280 600 B1**
(45) Veröffentlichungstag und Bekanntmachung des Hinweises auf die Patenterteilung: **06.04.2022**
(21) Anmeldenummer: 16714880.8
(22) Anmeldetag: 06.04.2016
(51) Int. Cl.: B60B 19/00, B60G 3/08, B60G 11/23, B62K 11/00, B62K 11/04, B62K 25/00, B62K 25/04, B62M 6/75, B62M 7/02

(54) **MOTORGETRIEBENES ZWEIRADFAHRZEUG**
MOTOR-DRIVEN TWO-WHEELED VEHICLE
VÉHICULE MOTORISÉ À DEUX-ROUES

(30) Priorität: 08.04.2015 DE 102015105324
(43) Veröffentlichungstag der Anmeldung: 14.02.2018
(73) Patentinhaber: Ujet S.A., 3364 Leudelange (LU)
(72) Erfinder: DAVID, Patrick, 89134 Blaustein (DE)
(74) Vertreter: Würmser, Julian
(86) Internationale Anmeldenummer: PCT/EP2016/057473
(87) Internationale Veröffentlichungsnummer: WO 2016/162354

(56) Entgegenhaltungen:
- EP-A2- 1 118 477
- WO-A1-90/00477
- DE-A1-102011 117 388
- US-A1- 2006 012 144
- US-A1- 2007 209 855
- US-A1- 2012 175 179

## Beschreibung

Die Erfindung betrifft ein motorgetriebenes Zweirad-Fahrzeug mit einem Chassis, einer Zentraleinheit, umfassend eine Antriebseinheit und einen Sitzträger, einen Cockpit-Aufbau mit Lenkvorrichtung und Bedieneinheit und mit jeweils einem Radträger hinten und vorne mit an den Radträgern geführtem Vorder- und Hinterrad.

Kompakte, relativ leichtgewichtige motorgetriebene Fahrzeuge setzen sich im insbesondere innerstädtischen Verkehr aufgrund des hohen Verkehrsaufkommens und der damit verbundenen Staugefahr, aber auch als z.B. auf Reisen flexibel einsetzbar immer mehr durch. Insbesondere besteht ein großer Bedarf an zu transportablen Einheiten zusammenlegbaren Zweirad-Fahrzeugen, die hinsichtlich Gewicht und Größe leicht handhab- und transportierbar sein sollen.

Aus der US 2007/0209855 A1 ist ein zweirädriges Fahrzeug bekannt, dessen Räder nabenlos an den Rändern von Felgen über Wälzlager befestigt sind. Eine Dämpfung des Vorder- und Hinterrads wird über Stoßdämpfer bereitgestellt.

Aus der DE 10 2011 117388 A1 beschreibt ebenfalls ein nabenlos befestigtes Rad, das über Wälzlager gehalten wird. Eine Dämpfung der Räder wird ebenfalls über Stoßdämpfer bereitgestellt, die an dem Rahmen eines Fahrzeugs befestigt sind.

Aus der US 2006/012144 A1 beschreibt ein nabenlos gelagertes Rad eines Fahrzeugs mit einer im Rad angeordneten Dämpfung. Die Dämpfung wird über Federn bereitgestellt.

Aus der US 2012/175179 A1 ist ein Fahrzeug mit nabenlos gelagertem Rad bekannt, wobei die Räder Trittflächen für die Füße des Fahrers aufweisen.

Dokument WO 90/00477 A1 beschreibt ein nabenlos gelagertes Rad eines motorisierten oder gezogenen Fahrzeugs, wobei das Rad mittels einer torsionselastischen Verbindung an der Querachse gelagert ist.

Aus der EP 1 118 477 A2 sind Radlagerungen mit unterschiedlichen Federtypen bekannt, unter anderem werden Torsionsfedern genannt.

Der Erfindung liegt die Aufgabe zu Grunde, ein neues Konzept für ein solches motorgetriebenes Zweirad-Fahrzeug, hinsichtlich Aufbau und vor allem hinsichtlich Gewicht anzubieten, das gegenüber den im Markt befindlichen Angeboten erhebliche Verbesserungen bringt.

Die Erfindung löst die angesprochenen Probleme durch ein Zweiradfahrzeug mit den Merkmalen des Anspruchs 1. Die großen Vorteile einer solchen Konstruktion gegenüber bekannten Konstruktionen mit Nabenrädern liegen insbesondere darin, dass durch die nabenlose Konstruktion der Räder erheblich Gewicht eingespart werden kann und dass durch die Verlegung der Gelenkpunkte für die Radaufhängung nahe an den Auflagepunkt des Rades auf einer Fahrbahn Vorteile beim Ein- bzw. Ausfedern ergeben. Darüber hinaus ist diese Konstruktion bei derart leichtgewichtigen Fahrzeugen mit dem Vorteil versehen, dass durch die geringen ungefederten Massen der Räder Fahrkomfort und Straßenlage deutlich verbessert sind.

Bei der Lösung nach der Erfindung wird am Radlagerkranz über einen Befestigungsflansch ein torsionselastisches Federelement angeordnet, das vorzugsweise aus einem mit dem Befestigungsflansch verbundenen - einstückig oder starr verblockt - Elementengehäuse besteht, in dem mindestens ein, vorzugsweise bei in etwa quadratischer Grundform des Elementengehäuses vier gleichmäßig verteilt angeordnete, stabförmig ausgebildete torsionselastische Federelemente verspannend eingebracht sind. Das bzw. die Federelemente können in bevorzugter Ausgestaltung des Erfindungsgegenstands mittels eines im Wesentlichen stabförmigen Federungskernelements verspannt im Elementengehäuse angeordnet sein. Über das Federungskernelement kann das Federelement mittels eines auf der dem Radträger zugewandten Seite angeordneten Befestigungsflansch am Radträger befestigt sein.

Über die Anordnung des stabförmigen Federungskernelements in Bezug auf den Radlagerkranz - Distanz Zentrum Federungskernelement zur Befestigung des Befestigungsflansches am Radlager = Hebelarm für die Einfederung des Rades - zusammen mit dem Elastizitätsgrad und den Abmessungen des/der Federelements/e sind Dämpfung bzw. Federung wähl- bzw. einstellbar. Besonders vorteilhaft wird eine Lösung nach der Erfindung gesehen, bei der das lenkbare Vorderrad über mittels eines am ringförmigen felgenseitigen Radlagerkranz mit dem über die Lenkvorrichtung lenkbaren Radträger so verbindbar ist, dass die theoretische Lenkachse durch das theoretische Radzentrum verläuft. Mit einer solchen Konstruktion wird ohne wesentlichen Aufwand erreicht, dass bei einem nabenlosen lenkbaren Rad Einlenkbewegungen in konventioneller Weise wie bei nabengelagerten Lenkrädern erfolgen können.

Als Bremsscheiben können bei einem Fahrzeug nach der Erfindung ringförmige Bremselemente mit der Felge verbunden werden, die mit an den Radträgern befestigbaren Bremsbacken im Wesentlichen in konventioneller Weise zusammenwirken.

Das angetriebene Hinterrad kann ein felgenseitig befestigtes ringförmiges Antriebselement aufweisen, das über die Antriebseinheit direkt oder indirekt antreibbar ist. Vorzugsweise erfolgt der Antrieb des felgenseitigen Antriebselements über eine oszillierende Hinterradbewegungen ausgleichende Getriebekonstruktion.

Nach einer besonders bevorzugten Antriebslösung zum Gegenstand der Erfindung ist das felgenseitige Antriebselement ein Zahnkranz, der über einen Zahnriemen antreibbar ist. Das felgenseitige Antriebselement kann aber auch als ringförmiger Kettenradkranz ausgeführt sein, der über eine Kette von der Antriebseinheit angetrieben wird.

Die mit der Erfindung verbundenen Vorteile lassen sich insbesondere bei einem nach der Art eines Motorrollers ausgeführten Zweirad-Fahrzeug verwirklichen. Durch die Gewichtsvorteile bietet sich die Konstruktion nach der Erfindung insbesondere bei einem klappbaren Zweirad-Fahrzeug an, wobei das geringe Gewicht durch die spezielle Radkonstruktion für einen rein elektrischen Antrieb eines solchen Fahrzeugs ideale Voraussetzungen bietet.

Um die Gewichtsvorteile in vollem Umfang nutzen zu können, bietet es sich an, die wesentlichen Bauteile eines solchen Fahrzeuges, z.B. Chassis, Zentraleinheit für die Aufnahme des Antriebs, Cockpit-Aufbau sowie Radträger als Faserverbundkonstruktion auszuführen.

Ein nach der Erfindung aufgebautes motorgetriebenes Zweirad-Fahrzeug ist in der Zeichnung dargestellt. Anhand dieses Ausführungsbeispiels und seiner Einzelheiten sollen die Merkmale und Einzelheiten des Erfindungsgegenstandes im Folgenden näher erläutert werden.

Es zeigt:
- Fig. 1: ein motorgetriebenes Fahrzeug nach der Erfindung in einer Seitenansicht;
- Fig. 2: das nabenlose Vorderrad eines motorgetriebenen Zweirad-Fahrzeugs nach der Erfindung mit dem vorderen Radträger;
- Fig. 3: das nabenlose Hinterrad eines Fahrzeugs nach der Erfindung mit Antriebseinheit und Bremsring und
- Fig. 4: die Anordnung eines torsionselastischen Federelements am Radträger (Vorderrad).

Das motorgetriebene Zweirad-Fahrzeug 1 ist aufgebaut aus einem Chassis 2, einer Zentraleinheit 3, beim Ausführungsbeispiel umfassend die Antriebseinheit 4, und, da als Elektrofahrzeug ausgeführt, einen Batteriekasten 5, einen Sitzträger 6 mit einem Fahrersitz 7, sowie einem Cockpit-Aufbau 8, umfassend Lenkvorrichtung mit Lenker 9 und Bedieneinheit. Ferner sind am Chassis 2 der hintere Radträger 10 und der vordere Radträger 11 angelenkt. Im gezeigten Ausführungsbeispiel sind aus Gewichtsgründen der hintere und der vordere Radträger 10, 11 als Einarm-Konstruktionen ausgeführt. Es ist jedoch ohne weiteres denkbar, dass sowohl der hintere als auch der vordere Radträger - oder ggf. auch nur einer von beiden - das bzw. die Räder gabelartig übergreifend ausgeführt sein können.

Das Hinterrad 12 und das Vorderrad 13 sind als nabenlose Konstruktionen - als Konstruktion im Grundsatzaufbau auch bekannt als "Franco-Sbarro-Orbitalrad"-ausgeführt. Die Radlagerung erfolgt im Ausführungsbeispiel über einen ringförmig an der Radfelge 14 bzw. 15 befestigten Radlagerkranz 20 bzw. 22 (nicht näher dargestellt). Der Radlagerkranz 20, 22 ist Teil eines an sich aus dem Fahrzeug- und/oder Maschinenbau bekannterweise als Wälzlager (Kugel, Rollen, Nadel) bekannten Lagerkonstruktion. Dabei sitzt einer der Ringe des Wälzlagers auf der Felge und dreht sich mit dieser und der zweite Ring ist feststehend am Radträger 10 bzw. 11 befestigt. Hinsichtlich dieser Lagerung stimmen die konstruktiven Details für die Hinterradlagerung und die Vorderradlagerung völlig bzw. zumindest weitgehend überein.

Ebenfalls weitgehend konstruktiv übereinstimmend am Hinterrad 12 bzw. am Vorderrad 13 ist der an der Felge angeordnete Brems-Ring 16 bzw. 17, der mit an den Radträgern 10 bzw. 11 befestigten Bremsbacken (nicht dargestellt) zusammenwirkt. Die Konstruktion der Bremsbacken entspricht im Wesentlichen dem aktuellen Stand der Technik.

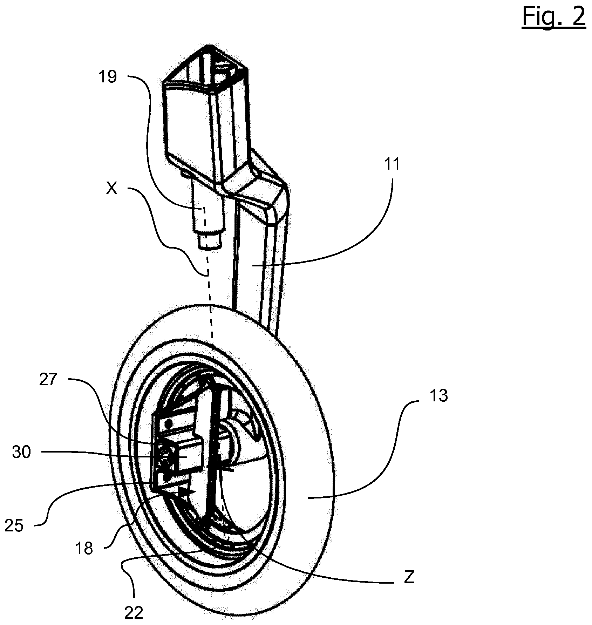

Fig. 2 zeigt im Detail den vorderen Einarm-Radträger 11 mit dem an ihm befestigten eigentlichen Radlager 18, das den ringförmigen Radlagerkranz des Wälzlagers trägt, der über die Wälzlagerelemente mit dem ebenfalls ringförmigen, an der Radfelge befestigten zweiten Radlagerkranz 22 zur eigentlichen Radlagerung zusammenwirkt. Um eine konventionelle Lenkung eines solchen Zweirad-Fahrzeugs mit einer derartigen nabenlosen Radkonstruktion möglich zu machen, sollte die fiktive Linie X = Achslinie der Lenkstange 19 durch das ebenfalls theoretische Zentrum Z im Vorderrad 13 verlaufen.

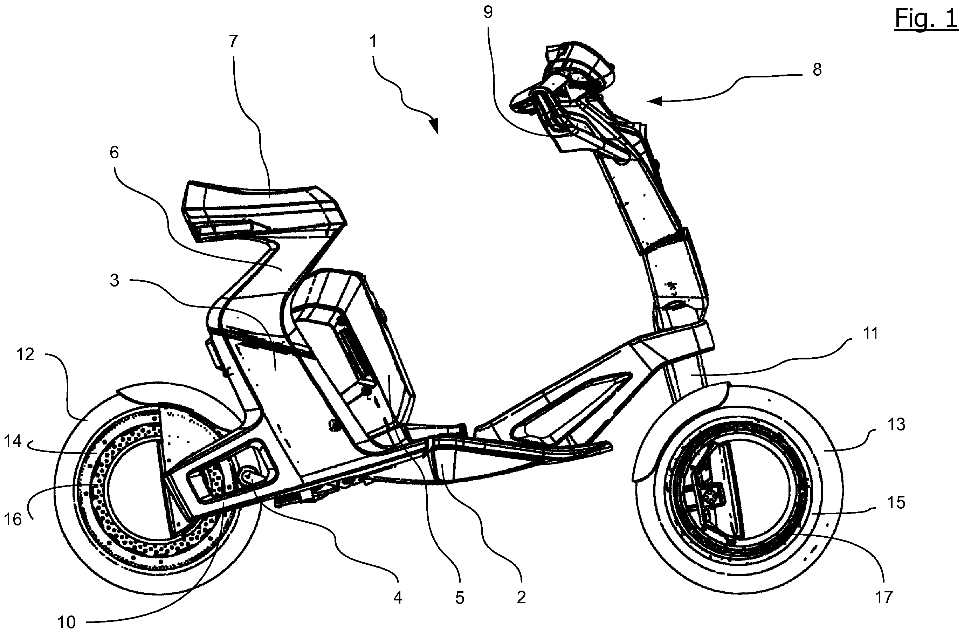

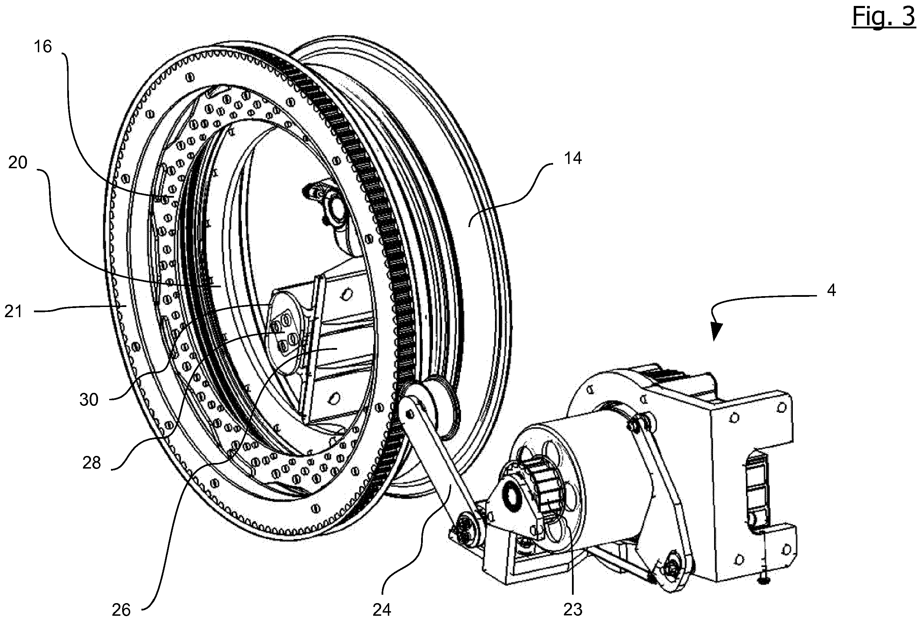

Fig. 3 zeigt die angetriebene Hinterradfelge 14 (ohne Reifen dargestellt). An der Radfelge 14 befestigt ist ein Radlagerkranz 20, der über die mit ihm zusammenwirkenden Wälzlagerelemente mit dem korrespondierenden Radlagerkranz, der am hinteren Radträger 10 (Fig. 1) befestigt ist, zusammenwirkt.

Ebenfalls befestigt an der Radfelge 14 sind Bremsring 16 und ein ringförmiger Zahnkranz 21 mit einer Außenverzahnung, über den mittels eines Zahnriemens (nicht gezeigt) der Antrieb des Hinterrads z.B. über ein Ritzel 23 einer Antriebseinheit 4 erfolgt. Die oszillierenden, ein- und ausfedernden Radbewegungen des Hinterrads 12 können durch einen Riemenspanner 24 ausgeglichen werden.

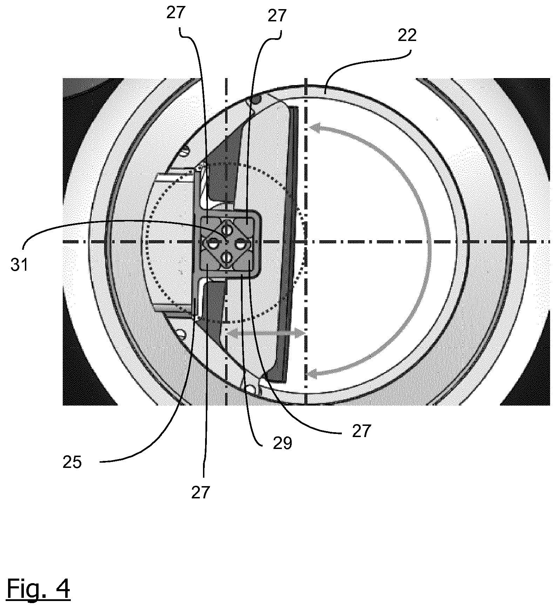

In den Figuren 2, 3 und 4 ist die Federungs- bzw. Dämpfungskonstruktion schematisch gezeigt, die beim Gegenstand der Erfindung zum Einsatz kommen soll: Der Radlagerkranz 20, 22 trägt über einen an ihm starr befestigten Befestigungsflansch 25, 26 in einem vorzugsweise einstückig mit dem Befestigungsflansch 25, 26 verbundenes, ein mindestens ein torsionselastisches Federelement 27, 28 aufnehmendes, in etwa in quadratischer Grundform ausgeführtes Elementengehäuse 29, 30. Im gezeigten Ausführungsbeispiel sind in diesem Elementengehäuse 29, 30 gleichmäßig in den Ecken des Quadrats vier Federelemente 27 mittels eines ebenfalls im Wesentlichen stabförmig ausgeführten, weitgehend starren, z.B. aus Stahl bestehenden Federungskernelement 31 unter Verspannung angeordnet. Auf der dem Radträger 10, 11 zugewandten Seite ist das Federungskernelement 31 über einen Befestigungsflansch (nicht gezeigt) am Radträger 10, 11 befestigt. Die Vorspannung bzw. ab- bzw. zunehmende Verspannung von Federelementen 27 und Elementengehäuse 29 mit dem Federungskernelement 31 bewirken bei Relativbewegungen des Rades bezogen auf den Rädträger 11 Federung bzw. Dämpfung infolge der auf das torsionselastische Federelement einwirkenden Torsionskräfte. Über die Anordnung des Federungskernelements 31 in Bezug auf den Radlagerkranz 22 zusammen mit dem Elastizitätsgrad und den Abmessungen des/der Federelements/e 27 sind Dämpfung bzw. Federung des Rades wähl- bzw. einstellbar.

### Bezugszeichenliste

- 1: motorgetriebenes Zweirad-Fahrzeug
- 2: Chassis
- 3: Zentraleinheit
- 4: Antriebseinheit
- 5: Batteriekasten
- 6: Sitzträger
- 7: Fahrersitz
- 8: Cockpit-Aufbau
- 9: Lenker
- 10: hinterer Radträger
- 11: vorderer Radträger
- 12: Hinterrad
- 13: Vorderrad
- 14: Radfelge hinten
- 15: Radfelge vorne
- 16, 17: Bremsring
- 18: Radlager
- 19: Lenkstange
- 20: Radlagerkranz hinten
- 21: ringförmiger Zahnkranz
- 22: Radlagerkranz vorne
- 23: Ritzel
- 24: Riemenspanner
- 25: Befestigungsflansch vorne
- 26: Befestigungsflansch hinten
- 27: Federelement vorne
- 28: Federelement hinten
- 29: Elementengehäuse vorne
- 30: Elementengehäuse hinten
- 31: Federungskernelement

- X: = fiktive Achslinie Lenkstange
- Z: = fiktives Zentrum Vorderrad

## Patentansprüche

1. Motorgetriebenes Zweirad-Fahrzeug mit einem Chassis (2), einer Zentraleinheit (3), umfassend eine Antriebseinheit (4, 23) und einen Sitzträger (6), mit einem Cockpit-Aufbau (8) mit Lenkvorrichtung (9, 19) und Bedieneinheit und mit jeweils einem Radträger (10, 11) hinten und vorne mit an den Radträgern (10, 11) geführtem Vorder- (13) und Hinterrad (12),
**dadurch gekennzeichnet, dass**
die Radträger (10, 11) einen ringförmigen Radlagerkranz (20) aufweisen, an dem über einen Befestigungsflansch (25, 26) ein torsionselastisches Federelement (27, 28, 29, 30, 31) angeordnet ist, wobei der Radlagerkranz (20) mit einem korrespondierenden ringförmigen an der Radfelge befestigten Radlagerkranz (22) über ein Wälzlager das Rad (12, 13) drehbar trägt und das torsionselastische Federelement (27, 28, 29, 30, 31) aus einem mit dem Befestigungsflansch (25, 26) verbundenen Elementengehäuse (29, 30) besteht, in dem mindestens ein im Wesentlichen stabförmig ausgebildetes, torsionselastisches Federelement (27, 28) verspannend eingebracht ist.

2. Zweirad-Fahrzeug nach Anspruch 1,
**dadurch gekennzeichnet, dass**
Elementengehäuse (29, 30) einstückig mit dem Befestigungsflansch (25, 26) verbunden ist.

3. Zweirad-Fahrzeug nach Anspruch 1,
**dadurch gekennzeichnet, dass**
das mindestens eine torsionselastische Federelement (27, 28) mittels eines im Wesentlichen stabförmigen Federungskernelements (31) verspannt im Elementengehäuse (29, 30) angeordnet ist.

4. Zweirad-Fahrzeug nach Anspruch 3,
**dadurch gekennzeichnet, dass**
das Federungskernelement (31) auf der dem Radträger (10, 11) zugewandten Seite des Federelements (27, 28) mit einem Befestigungsflansch zum Befestigen des Federungskernelements (31) am Radträger (10, 11) versehen ist.

5. Zweirad-Fahrzeug nach Anspruch 4,
**dadurch gekennzeichnet, dass**
über die Anordnung des Federungskernelements (31) in Bezug auf den Radlagerkranz (20, 22) zusammen mit dem Elastizitätsgrad und den Abmessungen des/der Federelements/e (27, 28) Dämpfung bzw. Federung des Rades wählbar bzw. einstellbar sind.

6. Zweirad-Fahrzeug nach Anspruch 1,
**dadurch gekennzeichnet, dass**
das lenkbare Vorderrad (13) über mittels eines am ringförmigen felgenseitigen Radlagerkranz befestigten Tragelements mit dem über die Lenkvorrichtung (9, 19) lenkbaren Radträger (11) so verbunden ist, dass die fiktive Lenkachse (X) durch das fiktive Radzentrum (Z) verläuft.

7. Zweirad-Fahrzeug nach Anspruch 1,
**dadurch gekennzeichnet, dass**
als Bremsscheibe ein mit der Radfelge (14, 15) verbundener Bremsring (16, 17) angeordnet ist, der mit am Radträger (10, 11) befestigbaren Bremsbacken zusammenwirkt.

8. Zweirad-Fahrzeug nach Anspruch 1,
**dadurch gekennzeichnet, dass**
das angetriebene Hinterrad (12) ein felgenseitig befestigbares, im Wesentlichen ringförmiges Antriebselement (21) aufweist, das über die Antriebseinheit (4, 23) direkt oder indirekt antreibbar ist.

9. Zweirad-Fahrzeug nach Anspruch 8,
**dadurch gekennzeichnet, dass**
der Antrieb des ringförmigen Antriebselements (21) über eine oszillierende Hinterradbewegungen ausgleichende Getriebekonstruktion erfolgt.

10. Zweirad-Fahrzeug nach Anspruch 8,
**dadurch gekennzeichnet, dass**
das Antriebselement (21) ein im Wesentlichen ringförmiger Zahnkranz (21) ist, der über einen Zahnriemen von der Antriebseinheit (4, 23) antreibbar ist.

11. Zweirad-Fahrzeug nach Anspruch 8,
**dadurch gekennzeichnet, dass**
das Antriebselement (21) ein im Wesentlichen ringförmiger Kettenradkranz (21) ist, der über eine Kette von der Antriebseinheit (4, 23) antreibbar ist.

12. Zweirad-Fahrzeug nach einem der vorhergehenden Ansprüche,
**dadurch gekennzeichnet, dass**
das Fahrzeug ein in Art eines Motorrollers ausgeführtes Zweirad-Fahrzeug ist.

13. Zweirad-Fahrzeug nach einem der vorhergehenden Ansprüche,
**dadurch gekennzeichnet, dass**
das Zweirad-Fahrzeug klappbar ausgeführt ist.

14. Zweirad-Fahrzeug nach einem der vorhergehenden Ansprüche,
**dadurch gekennzeichnet, dass**
das Zweirad-Fahrzeug mit einem reinen Elektro-Antrieb antreibbar ist.

15. Zweirad-Fahrzeug nach einem der vorhergehenden Ansprüche,
**dadurch gekennzeichnet, dass**
mindestens ein Bauteil des Zweirad-Fahrzeugs aus der Gruppe Chassis (2), Zentraleinheit (3), Cockpit-Aufbau (8), Radträger (10, 11), aus faserverstärktem Kunststoff hergestellt ist.

## Claims

1. A motor-driven two-wheeled vehicle (2) having a chassis, a central unit (3), comprising a driving unit (4, 23) and a seat carrier (6), having a cockpit structure (8) with a steering device (9, 19) and an operating unit and with in each case a wheel carrier (10, 11) at the rear and the front with a front wheel (13) and a rear wheel (12) guided on the wheel carriers (10, 11),
**characterized in that**
the wheel carriers (10, 11) have a ring-shaped wheel bearing rim (20), on which a torsion-elastic spring element (27, 28, 29, 30, 31) is disposed via a fastening flange (25, 26), wherein the wheel bearing rim (20) bears the wheel (12, 13) in a rotatable manner via a rolling bearing by means of a corresponding ring-shaped wheel bearing rim (22) fastened to the wheel rim, and the torsion-elastic spring element (27, 28, 29, 30, 31) is composed of an element housing (29, 30) connected to the fastening flange (25, 26), into which housing a torsion-elastic spring element (27, 28) formed to be substantially rod-shaped is introduced in a bracing manner.

2. The two-wheeled vehicle according to claim 1,
**characterized in that**
the element housing (29, 30) is connected integrally to the fastening flange (25, 26).

3. The two-wheeled vehicle according to claim 1,
**characterized in that**
the at least one torsion-elastic spring element (27, 28) is disposed within the element housing (29, 30) to be braced by means of a substantially rod-shaped suspension core element (31).

4. The two-wheeled vehicle according to claim 3,
**characterized in that,**
on the side of the spring element (27, 28) facing the wheel carrier (10, 11), the suspension core element (31) is provided with a fastening flange for fastening the suspension core element (31) to the wheel carrier (10, 11).

5. The two-wheeled vehicle according to claim 4,
**characterized in that**,
via the arrangement of the suspension core element (31) with respect to the wheel bearing rim (20, 22) together with the degree of elasticity and the dimensions of the spring element/s (27, 28), damping and/or suspension of the wheel are selectable and/or settable.

6. The two-wheeled vehicle according to claim 1,
**characterized in that**
the steerable front wheel (13) is connected via a support element fastened to the ring-shaped wheel bearing rim on the rim side, to the wheel carrier (11) that is steerable via the steering device (9, 19), such that the fictitious steering axle (X) runs through the fictitious wheel center (Z).

7. The two-wheeled vehicle according to claim 1,
**characterized in that,**
as the brake disc, a brake ring (16, 17) connected to the wheel rim (14, 15) is disposed cooperating with brake shoes attachable to the wheel carrier (10, 11).

8. The two-wheeled vehicle according to claim 1,
**characterized in that**
the driven rear wheel (12) has a substantially ring-shaped driving element (21) attachable on the rim side, which is directly or indirectly drivable via the driving unit (4, 23).

9. The two-wheeled vehicle according to claim 8,
**characterized in that**
the drive of the ring-shaped driving element (21) takes place via a gear construction balancing oscillating rear wheel movements.

10. The two-wheeled vehicle according to claim 8,
**characterized in that**
the driving element (21) is a substantially ring-shaped gear rim (21), which is drivable by the driving unit (4, 23) via a toothed belt.

11. The two-wheeled vehicle according to claim 8,
**characterized in that**
the drive element (21) is a substantially ring-shaped sprocket wheel rim (21), which is drivable by the driving unit (4, 23) via a chain.

12. The two-wheeled vehicle according to any one of the preceding claims,
**characterized in that**
the vehicle is a two-wheeled vehicle realized in the manner of a motor scooter.

13. The two-wheeled vehicle according to any one of the preceding claims,
**characterized in that**
the two-wheeled vehicle is realized to be foldable.

14. The two-wheeled vehicle according to any one of the preceding claims,
**characterized in that**
the two-wheeled vehicle is drivable by a pure electric drive.

15. The two-wheeled vehicle according to any one of the preceding claims,
**characterized in that**
at least one component of the two-wheeled vehicle from the group of chassis (2), central unit (3), cockpit structure (8), wheel carrier (10, 11), is made of fiber-reinforced plastics.

## Revendications

1. Véhicule motorisé à deux roues avec un châssis (2), une unité centrale (3), comprenant une unité d'entraînement (4, 23) et un porte-siège (6), avec une console de pilotage (8) avec dispositif de direction (9, 19) et unité de conduite et avec respectivement un support de roue (10, 11) à l'arrière et à l'avant avec une roue avant (13) et une roue arrière (12) guidées au niveau des supports de roue (10, 11),
**caractérisé en ce que**
les supports de roue (10, 11) présentent une couronne de palier de roue (20) de forme annulaire au niveau de laquelle un élément amortisseur (27, 28, 29, 30, 31) élastique en torsion est disposé via une bride de fixation (25, 26), sachant que la couronne de palier de roue (20) supporte la roue (12, 13) de manière rotative via un palier lisse avec une couronne de palier de roue (22) correspondante de forme annulaire fixée à la jante de roue et l'élément amortisseur (27, 28, 29, 30, 31) élastique en torsion est composé d'un boîtier d'élément (29, 30) relié à la bride de fixation (25, 26) dans lequel au moins un élément amortisseur (27, 28) élastique en torsion constitué sensiblement en forme de barre est logé en exerçant une contrainte.

2. Véhicule à deux roues selon la revendication 1,
**caractérisé en ce que**
le boîtier d'élément (29, 30) est relié d'une seule pièce à la bride de fixation (25, 26).

3. Véhicule à deux roues selon la revendication 1,
**caractérisé en ce que**
l'au moins un élément amortisseur (27, 28) élastique en torsion est disposé en contrainte dans le boîtier d'élément (29, 30) moyennant un élément d'amortissement central (31) ayant sensiblement une forme de barre.

4. Véhicule à deux roues selon la revendication 3,
**caractérisé en ce que**
l'élément d'amortissement central (31) est pourvu, du côté de l'élément amortisseur (27, 28) tourné vers le support de roue (10, 11), d'une bride de fixation permettant de fixer l'élément d'amortissement central (31) au support de roue (10, 11).

5. Véhicule à deux roues selon la revendication 4,
**caractérisé en ce que**
une absorption de chocs ou un amortissement de la roue peut être sélectionné ou réglé via l'agencement de l'élément d'amortissement central (31) par rapport à la couronne de palier de roue (20, 22) conjointement avec le degré d'élasticité et les dimensions du/des élément/s amortisseur/s (27, 28).

6. Véhicule à deux roues selon la revendication 1,
**caractérisé en ce que**
la roue avant (13) dirigeable est reliée au support de roue (11) dirigeable via le dispositif de direction (9, 19) moyennant un élément support fixé à la couronne de palier de roue de forme annulaire côté jante de telle sorte que l'axe de direction fictif (X) passe par le centre de roue fictif (Z).

7. Véhicule à deux roues selon la revendication 1,
**caractérisé en ce que**
une bague de frein (16, 17) reliée à la jante de roue (14, 15), qui interagit avec des mâchoires de frein pouvant être fixées au support de roue (10, 11), est disposé comme disque de frein.

8. Véhicule à deux roues selon la revendication 1,
**caractérisé en ce que**
la roue arrière (12) entraînée présente un élément d'entraînement (21) de forme sensiblement annulaire pouvant être fixé côté jante, qui peut être entraîné directement ou indirectement via l'unité d'entraînement (4, 23).

9. Véhicule à deux roues selon la revendication 8,
**caractérisé en ce que**
l'entraînement de l'élément d'entraînement (21) de forme annulaire s'effectue via une structure de transmission qui compense des mouvements oscillants de la roue arrière.

10. Véhicule à deux roues selon la revendication 8,
**caractérisé en ce que**
l'élément d'entraînement (21) est une couronne dentée (21) de forme sensiblement annulaire qui peut être entraînée par l'unité d'entraînement (4, 23) via une courroie dentée.

11. Véhicule à deux roues selon la revendication 8,
**caractérisé en ce que**
l'élément d'entraînement (21) est une couronne de roue à chaîne (21) de forme sensiblement annulaire qui peut être entraînée par l'unité d'entraînement (4, 23) via une chaîne.

12. Véhicule à deux roues selon l'une des revendications précédentes,
**caractérisé en ce que**
le véhicule est un véhicule à deux roues réalisé à la manière d'une motocyclette.

13. Véhicule à deux roues selon l'une des revendications précédentes,
**caractérisé en ce que**
le véhicule à deux roues est réalisé de manière pliante.

14. Véhicule à deux roues selon l'une des revendications précédentes,
**caractérisé en ce que**
le véhicule à deux roues peut être entraîné avec un entraînement purement électrique.

15. Véhicule à deux roues selon l'une des revendications précédentes,
**caractérisé en ce que**
au moins un composant du véhicule à deux roues issu du groupe constitué par le châssis (2), l'unité centrale (3), la console de pilotage (8), les supports de roue (10, 11), est fabriqué en matière synthétique renforcée par fibres.
